# EUROPÄISCHE PATENTANMELDUNG

(11) **EP 2 343 177 A2**
(43) Veröffentlichungstag der Anmeldung: **13.07.2011**
(21) Anmeldenummer: 10006764.4
(22) Anmeldetag: 30.06.2010
(51) Int. Cl.: B29C 45/42

(54) **Handhabungsvorrichtung sowie Spritzgussanlage**

(30) Priorität: 13.08.2009 DE 102009037074
(71) Anmelder: Waldorf Technik GmbH & Co. KG, 78234 Engen (DE)
(72) Erfinder: Fuhrmann, Ralf, 78234 Engen (DE)
(74) Vertreter: Wagner, Kilian

(57) **Zusammenfassung**

Die Erfindung betrifft eine Handhabungsvorrichtung (1), insbesondere zum Einsatz in einer Spritzgussanlage zum Entformen mindestens eines Spritzgussteils aus einer Spritzgussform, mit einem Antriebsaggregat (2) zum Verschwenken von Funktionsmitteln (19) um eine X-Achse, wobei die Funktionsmittel (19) zusätzlich entlang einer winklig, insbesondere rechtwinklig, zur X-Achse verlaufenden Achse translatorisch verstellbar sind, und mit an einem Träger (8) gehaltenen Umwandlungsmitteln (9) zum Umwandeln einer Drehbewegung in die translatorische Verstellbewegung der Funktionsmittel (19). Erfindungsgemäß ist vorgesehen, dass mit dem Antriebsaggregat (2) eine Antriebswelle (3) antreibbar ist, deren Drehbewegung von den Umwandlungsmitteln (9) in die translatorische Verstellbewegung der Funktionsmittel (19) umwandelbar ist, und dass der Antriebswelle (3) eine erste Kupplung (11) zugeordnet ist, mit der der Träger (8) der Umwandlungsmittel (9) zum rotatorischen Antreiben der Funktionsmittel (19) um die X-Achse drehfest mit der Antriebswelle (3) koppelbar ist.

## Beschreibung

Die Erfindung betrifft eine Handhabungsvorrichtung gemäß dem Oberbegriff des Anspruchs 1 sowie eine Spritzgussanlage (Spritzgussanordnung) zum Herstellen von Spritzgussteilen gemäß Anspruch 11.

Derartige Handhabungseinrichtungen finden meist Einsatz im Bereich der industriellen Fertigungs- und Handhabungstechnik. Insbesondere finden derartige Handhabungseinrichtungen Einsatz im Bereich der Spritzgusstechnik, meistens im Zusammenhang mit der Entformung von Spritzgussformen sowie der automatischen Zuführung von Verpackungsetiketten in einem IML (In-Mould-Labeling) Fertigungsprozess zum Herstellen von mit Etiketten zu versehenden Verpackungsbehältern. Dabei müssen Funktionsmittel, beispielsweise ein Sauger oder ein mechanischer Greifer, um eine X-Achse rotiert und translatorisch entlang einer rechtwinklig zur X-Achse verlaufenden Achse verstellt werden.

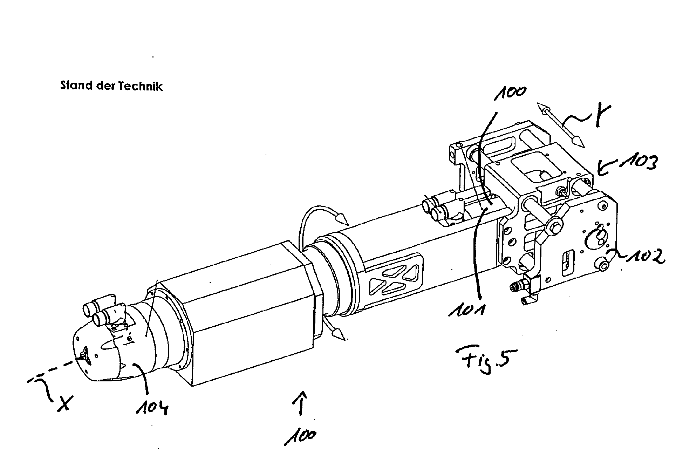

In Fig. 5 ist eine Handhabungseinrichtung nach dem hausintern bekannten Stand der Technik gezeigt. Die bekannte Handhabungseinrichtung 100 umfasst ein erstes, als Servomotor ausgebildetes, Antriebsaggregat 101, mit dem nicht dargestellte Funktionsmittel, die an einem Träger 102 befestigbar sind, translatorisch entlang einer Y-Achse verstellbar sind. Zum Umwandeln der Drehbewegung einer Motorwelle des ersten Antriebsaggregates 101 in die translatorische Verstellbewegung der Funktionsmittel entlang der Y-Achse sind Umwandlungsmittel 103 vorgesehen, die in dem gezeigten Ausführungsbeispiel ein Zahnstangengetriebe umfassen. Um die an dem Träger 102 gehaltenen, nicht dargestellten Funktionsmittel um eine rechtwinklig zur Y-Achse verlaufende X-Achse rotieren zu können, ist ein zweites, ebenfalls als Servomotor ausgebildetes, Antriebsaggregat 104 vorgesehen, mit dem die Umwandlungsmittel 103, samt erstem Antriebsaggregat 101 und Funktionsmitteln, um die X-Achse rotierbar sind. Die bekannte Handhabungsvorrichtung hat sich bewährt. Nachteilig ist jedoch, dass diese aufgrund der Notwendigkeit zum Einsatz von zwei Antriebsaggregaten nur kostenintensiv herstellbar ist.

Ausgehend von dem vorangehend beschriebenen Stand der Technik liegt der Erfindung die Aufgabe zugrunde, eine einfach aufgebaute Handhabungsvorrichtung, insbesondere zum Einsatz in einer Spritzgussanlage, anzugeben. Bevorzugt soll eine rotatorische Verstellbewegung von Funktionsmifteln um eine X-Achse und eine translatorische Verstellbewegung der Funktionsmittel um eine winklig, vorzugsweise rechtwinklig, zur X-Achse verlaufende Achse mit nur einem einzigen Antriebsaggregat aktuierbar sein. Ferner besteht die Aufgabe darin, eine Spritzgussanlage mit einer entsprechend verbesserten Handhabungsvorrichtung anzugeben.

Diese Aufgabe wird hinsichtlich der Handhabungsvorrichtung mit den Merkmalen des Anspruchs 1 und hinsichtlich der Spritzgussanlage mit den Merkmalen des Anspruchs 11 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, das Antriebsaggregat, das zum Verschwenken der Funktionsmittel samt Umwandlungsmittel um die X-Achse ausgebildet und angeordnet ist, gleichzeitig zum Antreiben bzw. Betätigen der Umwandlungsmittel einzusetzen, so dass letztere eine Drehbewegung des Antriebsaggregates, vorzugsweise eine Drehbewegung einer Motorwelle des Antriebsaggregates, in eine translatorische Verstellbewegung der Funktionsmittel entlang einer winklig, vorzugsweise rechtwinklig, zur X-Achse verlaufenden Y-Achse umwandeln können. Anders ausgedrückt dient das zum rotatorischen Antreiben der Funktionsmittel um die X-Achse eingesetzte Antriebsaggregat, bei dem es sich vorzugsweise um einen Servomotor handelt, bei einer nach dem Konzept der Erfindung ausgebildeten Handhabungsvorrichtung gleichzeitig zum translatorischen Verstellen der Funktionsmittel, die bevorzugt zum Entformen von Spritzgussteilen aus einer Spritzgussform und/oder zum Einsetzen von Etiketten in eine Spritzgussform einsetzbar sind, entlang einer winklig zur X-Achse verlaufenden Y-Achse. Um dies zu erreichen, ist dem Antriebsaggregat eine Antriebswelle zugeordnet, die mittels des Antriebsaggregates rotierbar ist, wobei die Drehbewegung der Antriebswelle über eine erste Kupplung, mittelbar oder unmittelbar, auf einen Träger übertragbar ist, der die Umwandlungsmittel zum translatorischen Verstellen der Funktionsmittel trägt. Wird der Träger über die erste Kupplung mit der Antriebswelle gekoppelt, resultiert eine Rotations- bzw. Schwenkbewegung der Umwandlungsmittel und der Funktionsmittel um die X-Achse. Ist die erste Kupplung geöffnet, kann sich die die X-Achse definierende bzw. sich entlang der X-Achse erstreckende Antriebswelle frei relativ zu dem Träger und damit zu den Umwandlungsmitteln und den Funktionsmitteln verdrehen, wobei die Drehbewegung der Antriebswelle mittels der Umwandlungsmittel in die translatorische Verstellbewegung der Funktionsmittel entlang der Y-Achse umwandelbar ist.

Ganz besonders bevorzugt handelt es sich bei der Translationsbewegung um eine Entform-, d.h. Entnahmebewegung zum Entnehmen eines Spritzgussteils aus einer Spritzgussform und/oder um eine Einlegebewegung zum Einlegen eines im IML-Verfahren mit dem Spritzgussteil zu verbindenden Etiketts. Die Erfindung ist nicht auf das Vorsehen eines einzigen, translatorisch entlang einer winklig zur X-Achse verlaufenden Y-Achse verstellbaren, Funktionsmittels beschränkt. Mithilfe der Umwandlungsmittel können auch zwei, ggf. unterschiedliche, Funktionsmittel, ggf. in unterschiedliche Richtungen, translatorisch verstellt werden, beispielsweise ein Funktionsmittel zum Entformen eines Spritzgussteils aus einer Spritzgussform und ein weiteres Funktionsmittel zum Einlegen eines Etiketts in eine Spritzgussform.

In Weiterbildung der Erfindung ist mit Vorteil vorgesehen, dass die erste Kupplung - im geschlossenem Zustand - eine Hohlwelle mit der Antriebswelle drehfest koppelnd angeordnet ist, wobei die Hohlwelle wiederum, unmittelbar oder zumindest mittelbar, drehfest mit dem eigentlichen Träger für die Umwandlungsmittel verbunden ist. Alternativ kann die Hohlwelle den Träger bilden oder der Träger, gegebenenfalls ohne eine Hohlwelle vorzusehen, direkt mit der Antriebswelle koppelbar angeordnet werden.

Ganz besonders bevorzugt ist eine Ausführungsform, bei der die, vorzugsweise konzentrisch zur Antriebswelle angeordnete, Hohlwelle von der Antriebswelle durchsetzt ist. Anders ausgedrückt ist die Antriebswelle bevorzugt im Zentrum der Hohlwelle angeordnet, welche wiederum mit dem Träger gekoppelt ist. Bevorzugt handelt es sich bei der Hohlwelle um ein rotationssymmetrisches Bauteil. Es ist alternativ auch eine Ausführungsform realisierbar, bei der die Kupplung die Antriebswelle unmittelbar mit dem Träger koppelt, bei dem es sich nicht zwingend um ein rotationssymmetrisches Bauteil handeln muss. Ganz besonders bevorzugt ist der Träger im Querschnitt rechteckig, vorzugsweise quadratisch, konturiert.

Besonders zweckmäßig ist es, zusätzlich zu der ersten Kupplung eine zweite Kupplung vorzusehen, wobei die zweite Kupplung zum drehfesten Koppeln des Trägers mit einem in Bezug auf die Antriebswelle drehfest angeordneten Bauteil, insbesondere einem Gehäuseteil, ausgebildet und angeordnet ist. Dabei kann die zweite Kupplung bei Bedarf unmittelbar den Träger mit dem drehfest angeordneten Bauteil koppelnt angeordnet sein - bevorzugt ist jedoch eine Ausführungsform, bei der die zweite Kupplung unmittelbar mit der vorerwähnten, insbesondere rotationssymmetrischen, Hohlwelle zusammenwirkt und diese im geschlossenen Zustand der zweiten Kupplung drehfest mit dem drehfest angeordneten Bauteil, insbesondere dem Gehäuse, koppelt. Durch das drehfeste Koppeln des Trägers mit dem drehfest angeordneten Bauteil, insbesondere dem Gehäuseteil, kann ein Verdrehen der Umwandlungsmittel und damit der Funktionseinheit um die X-Achse im Bedarfsfall sicher verhindert werden. Besonders bevorzugt ist die zweite Kupplung geschlossen, d.h. ist der Träger drehfest mit dem drehfest angeordneten Bauteil gekoppelt, wenn die erste Kupplung geöffnet ist, so dass die Antriebswelle relativ zu dem festgehaltenen Träger rotieren und in der Folge die Funktionsmittel über die Umwandlungsmittel translatorisch verstellen kann.

In Weiterbildung der Erfindung ist den Kupplungen bevorzugt eine Steuerung (Steuereinheit) zugeordnet, die, für den Fall, dass eine Rotationsbewegung der Funktionsmittel um die X-Achse bewirkt werden soll, die erste Kupplung schließt bzw. ein Schließen bewirkt oder veranlasst, eine Antriebswelle mit dem Träger (unmittelbar oder mittelbar) zu koppeln und die zweite Kupplung öffnet bzw. ein Öffnen bewirkt oder veranlasst, so dass einerseits der Träger über die Antriebswelle rotierend angetrieben wird und gleichzeitig sichergestellt wird, dass der Träger relativ zu dem vorerwähnten drehfest angeordneten Bauteil, insbesondere einem Gehäuseteil, rotieren kann.

Zusätzlich oder alternativ ist die Steuerung bevorzugt derart ausgebildet, dass diese zur Bewirkung einer translatorischen Bewegung der Funktionsmittel entlang einer winklig, insbesondere rechtwinklig, zur X-Achse verlaufenden Y-Achse die erste Kupplung öffnet bzw. ein Öffnen bewirkt oder veranlasst, so dass die Antriebswelle relativ zum Träger verdrehbar ist und die zweite Kupplung schließt bzw. ein Schließen bewirkt oder veranlasst, so dass der Träger drehfest zu dem drehfest angeordneten Bauteil, insbesondere dem Gehäuse, angebracht ist, um zu verhindern, dass der Träger und damit die Funktionsmittel um die X-Achse rotieren können, während die Funktionsmittel über die Umwandlungsmittel translatorisch angetrieben werden.

Ganz besonders bevorzugt ist es, wenn die Steuerung derart ausgebildet ist, dass sie ein gemeinsames Öffnen beider Kupplungen verhindert, um unkontrollierte Bewegungen, die im Falle des Öffnens beider Kupplungen resultieren würden, zu vermeiden.

Besonders zweckmäßig ist es, das, vorzugsweise einzige, Antriebsaggregat, mit dem die Funktionsmittel sowohl um die X-Achse verschwenkt, als auch entlang der Y-Achse translatorisch verstellt werden können, als elektrischer Servomotor auszubilden.

Im Hinblick auf die Ausbildung der Umwandlungsmittel gibt es unterschiedliche Möglichkeiten. So können diese beispielsweise als Scherengelenkantrieb oder als Zahnstangenantrieb ausgebildet sein. Wesentlich ist, dass die Umwandlungsmittel eine Rotationsbewegung der von dem Antriebsaggregat angetriebenen Antriebswelle in eine translatorische Verstellbewegung der Funktionsmittel umwandeln. Im Falle der Ausbildung der Umwandlungsmittel als Scherengelenkantrieb ist es bevorzugt, wenn über die Antriebswelle eine Kurbel um die X-Achse verschwenkt wird, die wiederum verstellend auf einen Scherenarm wirkt.

Auch im Hinblick auf die konkrete Ausbildung der Funktionsmittel gibt es unterschiedliche Möglichkeiten. Wesentlich ist lediglich, dass diesen eine Funktion zugewiesen ist. Im einfachsten Fall kann es sich bei dem Funktionsmittel um reine Transportmittel handeln, also beispielsweise im einfachsten Fall um eine Transportfläche zum Transportieren eines Teils, beispielsweise eines Spritzgussteils. Ganz besonders bevorzugt sind die Funktionsmittel zum mechanischen Greifen und/oder Ansaugen mittels Unterdruck ausgebildet, insbesondere um gezielt Teile entnehmen und/oder an eine bestimmte Position verstellen und dort abladen zu können.

Die Erfindung führt auch auf eine Spritzgussanlage (Spritzgussanordnung),vorzugsweise eine IML-Anlage, umfassend eine Spritzgussvorrichtung mit mindestens einer Spritzgussform, sowie eine, wie zuvor beschrieben ausgebildete, Handhabungsvorrichtung, die zum Entnehmen, d.h. Entformen, von Spritzgussteilen aus dem Spritzgusswerkzeug und/oder zum Einlegen von Etiketten in das Spritzgusswerkzeug (Spritzgussform) ausgebildet und angeordnet ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine unvollständige Darstellung einer Handhabungsvorrichtung (Umwand- lungsmittel und Funktionsmittel sind nicht gezeigt),
- Fig. 2:: eine Schnittansicht entlang der Schnittlinie a - a gemäß Fig. 1,
- Fig. 3:: eine perspektivische Ansicht der Handhabungsvorrichtung gemäß den Fig. 1 und 2,
- Fig. 4:: eine perspektivische Ansicht der Handhabungsvorrichtung, wobei als Um- wandlungsmittel ein Scherengelenkantrieb (Scherengelenk) vorgesehen ist, von dem nicht dargestellte Funktionsmittel, beispielsweise Unterdruck- sauger oder mechanische Greifer, getragen werden können, und
- Fig. 5:: eine Handhabungsvorrichtung nach dem hausinternen Stand der Technik.

Bei den Figuren sind gleiche Elemente und Elemente mit der gleichen Funktion mit den gleichen Funktionszeichen gekennzeichnet.

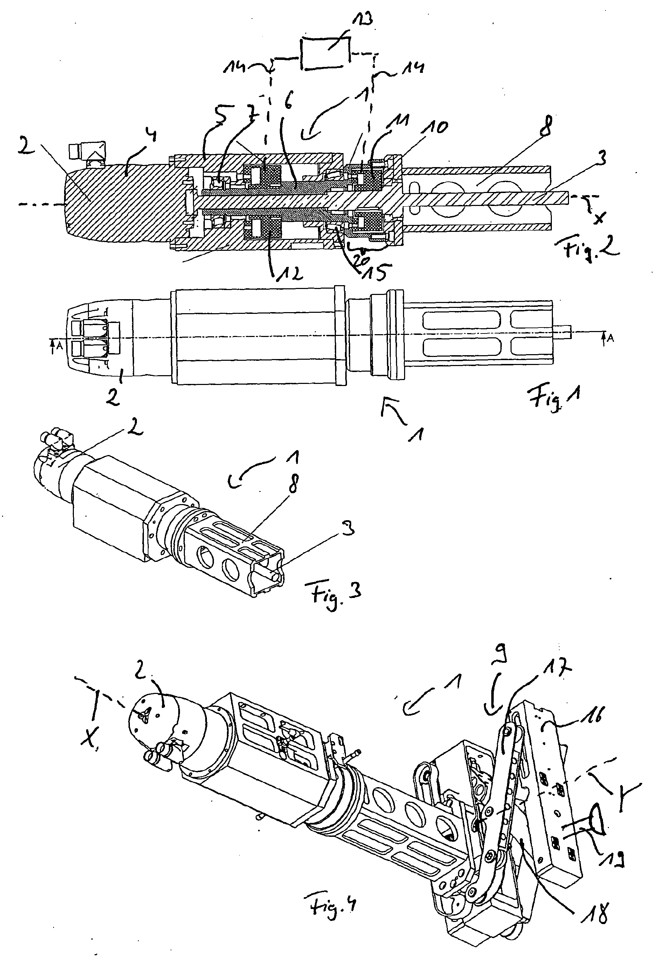

In den Fig. 1 bis 4 ist - teilweise unvollständig - eine Handhabungsvorrichtung 1 gezeigt, die zum Zusammenwirken mit einer nicht dargestellten, an sich bekannten Spritzgussvorrichtung ausgebildet ist. Mit der Handhabungsvorrichtung können Spritzgussteile aus Spritzgussformen entformt und/oder Etiketten in Spritzgussformen eingelegt werden.

Wie sich aus einer Zusammenschau der Fig. 1 bis 4 ergibt, umfasst die Handhabungsvorrichtung 1 ein einziges, als Servomotor ausgebildetes, Antriebsaggregat 2, welches, wie später noch erläutert werden wird, eine Doppelfunktion hat. Mit dem Antriebsaggregat 2 ist eine zentrische Antriebswelle 3 dauerhaft drehfest gekoppelt, wie sich insbesondere aus Fig. 2 ergibt. Die Antriebswelle 3 definiert eine X-Achse, um die die Antriebswelle 3 mittels des Antriebsaggregates 2 rotierbar ist. Bei Bedarf kann die gesamte Handhabungsvorrichtung 1 zusätzlich entlang dieser X-Achse, beispielsweise mittels eines pneumatischen Antriebs, verstellbar angeordnet sein.

Wie sich insbesondere aus Fig. 2 ergibt, ist an einem Aggregatsgehäuse 4 ein Gehäuse 5 angeflanscht, welches von der Antriebswelle 3 in axialer Richtung durchsetzt wird.

Innerhalb des Gehäuses 5 ist eine Hohlwelle 6 drehbar über ein Wälzlager 7 gelagert, wobei sich die rotationssymmetrische Hohlwelle 6 in axialer Richtung aus dem Gehäuse 5 heraus erstreckt und außerhalb des Gehäuses 5 drehfest mit einem Träger 8 für in Fig. 4 gezeigte Umwandlungsmittel 9 gekoppelt. Hierzu ist am Träger 8 in der Zeichnungsebene links ein Flanschbereich 10 vorgesehen. Im Gegensatz zu der Hohlwelle 6 ist der Träger 8 nicht rotationssymmetrisch ausgebildet, sondern im Querschnitt rechteckig konturiert. Der Träger 8 wird, wie die Hohlwelle 6, zentrisch von der Antriebswelle 3 durchsetzt. Mit Axialabstand zu dem Wälzlager 7 ist ein weiteres Wälzlager 15 vorgesehen, mit dem die Hohlwelle 6 in einem vorderen Bereich des Gehäuses 5 drehbar gelagert ist.

Insgesamt umfasst die Handhabungsvorrichtung 1 zwei Kupplungen, nämlich eine erste Kupplung 11, die außerhalb des Gehäuses 5 angeordnet ist, und eine zweite Kupplung 12 innerhalb des Gehäuses 5. Wie sich aus Fig. 2 ergibt, ist die erste Kupplung 11 in einem endseitigen, durchmessererweiterten Abschnitt 20 der Hohlwelle 6 angeordnet und wirkt im geschlossenen Zustand reibschlüssig mit dem Innenumfang der Hohlwelle 6 zusammen. Die erste Kupplung 11 dient dazu, im geschlossenen Zustand die Antriebswelle drehfest mit der Hohlwelle 6 und damit mit dem Träger 8 zu koppeln, um den Träger 8 mit daran festgelegten Umwandlungsmitteln 9 um die X-Achse verschwenken zu können. Die zweite Kupplung 12 ist derart ausgebildet und angeordnet, dass mit dieser die Hohlwelle 6 und damit der Träger 8 drehfest mit dem Gehäuse 5 (drehfest angeordnetes Bauteil) koppelbar ist, um ein Verdrehen des Trägers 8 relativ zu dem Gehäuse 5 verhindern zu können. Den Kupplungen 11, 12 ist eine Steuerung 13 (Steuereinheit) zugeordnet, die mit den Kupplungen 11, 12 wirkverbunden ist, wobei die Wirkverbindung über gestrichelte Linien 14 angedeutet ist. Bevorzugt handelt es sich dabei um elektrische Steuerleitungen, mit denen elektrische Aktuatoren ansteuerbar sind. Grundsätzlich ist aber auch eine pneumatische oder hydraulische Ansteuerung der Kupplungen 11, 12 (je nach Ausbildung der Kupplungen) denkbar. Die Kupplungen 11, 12 können reibschlüssig und/oder formschlüssig arbeitend ausgebildet sein.

Die Steuerung 13 ist bevorzugt derart ausgebildet, dass diese verhindert, dass die erste Kupplung und die zweite Kupplung gleichzeitig geöffnet sind. Die Steuerung 13 ist bevorzugt auch derart ausgebildet, dass diese eine Ansteuerung (Anlaufen) des Antriebsaggregates 2 bei gleichzeitig geschlossenen Kupplungen 11, 12 verhindert. Zur Realisierung einer Drehbewegung des Trägers 8 und damit der Umwandlungsmittel 9 sowie der Funktionsmittel 19 (lediglich angedeutet in Figur 4) öffnet die Steuerung 13 die zweite Kupplung 12 und die erste Kupplung 11 bleibt geschlossen, um somit einerseits die Hohlwelle 6 und damit den Träger 8 und damit wiederum die Umwandlungsmittel 9 und die Funktionsmittel drehfest mit der Antriebswelle 3 zu koppeln und andererseits ein Relativverdrehen der Hohlwelle 6 und damit des Trägers 8 relativ zum Gehäuse 5 zu ermöglichen. Sollen dagegen die Funktionsmittel mithilfe der Umwandlungsmittel 9 translatorisch entlang der in Fig. 4 eingezeichneten, gedachten, rechtwinklig zu X-Achse verlaufenden Y-Achse verstellt werden, trägt die Steuerung 13 Sorge dafür, dass die erste Kupplung 11 geöffnet ist und somit die Antriebswelle 3 relativ zum Träger 8 verdreht werden kann und gleichzeitig die zweite Kupplung 12 geschlossen ist, um den Träger 8 in einer definierten Schwenkposition in Bezug auf die X-Achse festzuhalten. Durch Rotation der Antriebswelle 3 bei geöffneter erster Kupplung 11 und geschlossener zweiter Kupplung 12 wirkt die Antriebswelle 3 antreibend auf die als Scherengelenkantrieb ausgebildeten Umwandlungsmittel 9, vorzugsweise mittels einer drehfest auf der Antriebswelle 3 sitzenden, nicht gezeigten Kurbel, derart, dass ein die Umwandlungsmittel 19 tragender Halter 16, der gelenkig mit zwei Scherenarmen 17, 18 der Umwandlungsmittel 9 verbunden ist, translatorisch entlang der Y-Achse verstellt wird. Bei Bedarf können mehrere Umwandlungsmittel gleichzeitig mithilfe der Antriebswelle 3 antreibbar sein oder die Umwandlungsmittel 9 derart ausgebildet sein, dass diese gleichzeitig mehrere Funktionsmittel verstellen.

Der Halter 16 dient wie, bereits angedeutet, zur Fixierung von lediglich angedeuteten, mit dem Bezugszeichen 19 versehenen Funktionsmittel 19, die in dem gezeigten Ausführungsbeispiel zum Ansaugen von Spritzgussteilen dienen, mit dem Zweck, diese translatorisch aus der Spritzgussform entnehmen zu können.

Anstelle eines Scherengelenkantriebs können zusätzlich oder alternativ als Umwandlungsmittel 9 beispielsweise auch ein Spindelantrieb vorgesehen werden.

### Bezugszeichenliste

- 1: Handhabungsvorrichtung
- 2: Antriebsaggregat
- 3: Antriebswelle
- 4: Aggregatsgehäuse
- 5: Gehäuse
- 6: Hohlwelle
- 7: Wälzlager
- 8: Träger
- 9: Umwandlungsmittel
- 10: Flanschabschnitt, Flanschbereich
- 11: erste Kupplung
- 12: zweite Kupplung
- 13: Steuerung
- 14: gestrichelte Linie (Wirkverbindung)
- 15: Wälzlager
- 16: Halter
- 17: Scherenarm
- 18: Scherenarm
- 19: Funktionsmittel
- 20: Hohlwellenabschnitt

- X: -Achse
- Y: -Achse

- 100: Handhabungsvorrichtung
- 101: erstes Antriebsaggregat
- 102: Träger
- 103: Umwandlungsmittel
- 104: zweites Antriebsaggregat

## Patentansprüche

1. Handhabungsvorrichtung (1), insbesondere zum Einsatz in einer Spritzgussanlage zum Entformen mindestens eines Spritzgussteils aus einer Spritzgussform, mit einem Antriebsaggregat (2) zum Verschwenken von Funktionsmitteln (19) um eine X-Achse, wobei die Funktionsmittel (19) zusätzlich entlang einer winklig, insbesondere rechtwinklig, zur X-Achse verlaufenden Achse translatorisch verstellbar sind, und mit an einem Träger (8) gehaltenen Umwandlungsmitteln (9) zum Umwandeln einer Drehbewegung in die translatorische Verstellbewegung der Funktionsmittel (19),
**dadurch gekennzeichnet,**
**dass** mit dem Antriebsaggregat (2) eine Antriebswelle (3) antreibbar ist, deren Drehbewegung von den Umwandlungsmitteln (9) in die translatorische Verstellbewegung der Funktionsmittel (19) umwandelbar ist, und dass der Antriebswelle (3) eine erste Kupplung (11) zugeordnet ist, mit der der Träger (8) der Umwandlungsmittel (9) zum rotatorischen Antreiben der Funktionsmittel (19) um die X-Achse drehfest mit der Antriebswelle (3) koppelbar ist.

2. Handhabungsvorrichtung nach Anspruch 1,
**dadurch gekennzeichnet,**
**dass** die erste Kupplung (11) mit einer sich entlang der Antriebswelle (3) erstreckenden, drehfest mit dem Träger (8) verbundenen Hohlwelle (6) zusammenwirkend angeordnet ist.

3. Handhabungsvorrichtung nach Anspruch 2,
**dadurch gekennzeichnet,**
**dass** die, insbesondere konzentrisch zur Antriebswelle (3) angeordnete, Hohlwelle (6) von der Antriebswelle (3) durchsetzt ist.

4. Handhabungsvorrichtung nach einem der vorhergehenden Ansprüche,
**dadurch gekennzeichnet,**
**dass** eine zweite Kupplung (12) zum drehfesten Koppeln des Trägers (8), insbesondere durch Zusammenwirken mit der Hohlwelle (6), mit einem drehfest angeordneten Bauteil, insbesondere einem Gehäuse (5), vorgesehen ist.

5. Handhabungsvorrichtung nach Anspruch 4,
**dadurch gekennzeichnet,**
**dass** eine Steuerung (13) für die erste und die zweite Kupplung (11, 12) vorgesehen ist, und dass die Steuerung (13) die erste und die zweite Kupplung (11, 12) zur Realisierung einer Drehbewegung der Funktionsmittel (19) um die X-Achse derart ansteuernd ausgebildet ist, dass die erste Kupplung (11) die Antriebswelle (3) mit den Umwandlungsmitteln (9) drehfest koppelt und die zweite Kupplung (12) geöffnet ist, so dass die Umwandlungsmittel (9) relativ zu dem Bauteil verdrehbar sind.

6. Handhabungsvorrichtung nach einem der Ansprüche 4 oder 5,
**dadurch gekennzeichnet,**
**dass** die Steuerung (13) die erste und die zweite Kupplung (11, 12) zur Realisierung der translatorischen Verstellbewegung der Funktionsmittel (19) winklig zur X-Achse derart ansteuernd ausgebildet ist, dass die erste Kupplung (11) geöffnet ist, so dass die Antriebswelle (3) relativ zu den Umwandlungsmitteln (9), vorzugsweise zu deren Träger (8), verdrehbar ist, und derart, dass die zweite Kupplung (12) die Umwandlungsmittel (9), vorzugsweise deren Träger (8), drehfest mit den Bauteil koppelt.

7. Handhabungsvorrichtung nach einem der Ansprüche 4 bis 6,
**dadurch gekennzeichnet,**
**dass** die Steuerung (13) den Zustand gleichzeitig geöffneter Kupplungen (11, 12) verhindernd ausgebildet ist.

8. Handhabungsvorrichtung nach einem der vorhergehenden Ansprüche,
**dadurch gekennzeichnet,**
**dass** das, vorzugsweise einzige, Antriebsaggregat (2) zum Verschwenken der Funktionsmittel (19) und zum translatorischen Verstellen der Funktionsmittel (19) ein Servomotor ist.

9. Handhabungsvorrichtung nach einem der vorhergehenden Ansprüche,
**dadurch gekennzeichnet,**
**dass** die Umwandlungsmittel (9) einen Scherengelenkantrieb oder einen Zahnstangenantrieb zum Umwandeln der Drehbewegung der Antriebswelle (3) in eine translatorische Verstellbewegung der Funktionsmittel (19) umfassen.

10. Handhabungsvorrichtung nach einem der vorhergehenden Ansprüche,
**dadurch gekennzeichnet,**
**dass** die Funktionsmittel (19) mindestens einen Unterdrucksauger und/oder mindestens einen Greifer und/oder mindestens eine Transportfläche umfassen.

11. Spritzgussanlage, umfassend eine Spritzgussvorrichtung und eine Handhabungsvorrichtung (1) nach einem der vorhergehenden Ansprüche.
